# EUROPEAN PATENT APPLICATION

(11) **EP 0 945 663 A2**
(43) Date of publication of application: **29.09.1999**
(21) Application number: 99105455.2
(22) Date of filing: 17.03.1999
(51) Int. Cl.: F16L 47/04, F16L 19/02

(54) **A clamping ring coupling**

(30) Priority: 27.03.1998 SE 9801087
(71) Applicant: Ezze AB, 335 28 Gnosjö (SE)
(72) Inventor: Stigson, Joakim, 335 32 Gnosjö (SE)
(74) Representative: Linde, Leif

(57) **Abstract**

A clamping ring coupling for connecting a pipe (2) of the type crosslinked polyethylene pipe (PEX pipe) with a conventional pipe element (4) provided with an external thread (6) comprises a coupling nut (8) screwable onto said thread of the pipe element and provided with an internal thread (14) and a clamping ring (10) positioned between the outer surface of the end portion of the pipe (2) and an inner surface of the coupling nut (8) axially inside the internal thread (14) of the coupling nut. The coupling nut and the clamping ring have engagement surfaces contacting each other at the front edge portion of the clamping ring in the direction of screwing the coupling nut onto the pipe element, the engagement surfaces cooperating for forcing the clamping ring (10) against the outer surface of the end portion (2) of the pipe when the coupling nut (8) is tightened onto the pipe element (4). The internal thread (14) of the coupling nut (8) is flattened at its thread tops (at 30) for providing an internal diameter of the coupling nut (8), which exceeds the normal tolerance of the thread in order to make it possible to provide the clamping ring coupling with a clamping ring (10) of such an outer diameter that the clamping ring can be formed with sufficient material thickness so as to be used for fixing a crosslinked polyethylene pipe (2) in the clamping ring coupling.

## Description

The present invention relates to a clamping ring coupling for connecting a pipe of the type crosslinked polyethylene pipe (PEX pipe) with a pipe element of a conventional kind, which is provided with an external thread.

For connecting a common pipe with a pipe element of a conventional kind provided with an external thread there is used a clamping ring coupling comprising a coupling nut threadable onto the external thread of the pipe element and provided with an internal thread and a clamping ring positioned between the outer surface of the end portion of the pipe and an inner surface of the coupling nut axially inside the internal thread of the coupling nut. The coupling nut and the clamping ring have engagement surfaces contacting each other at the forward edge portion in the direction of screwing the coupling nut onto the pipe element, said engagement surfaces cooperating for forcing the clamping ring against the outer surface of the end portion of the pipe when the coupling nut is tightened onto the pipe element.

When connecting pipes of the type crosslinked polyethylene pipes (PEX pipes) with a pipe element of the conventional kind it has so far been necessary to use complicated special solutions of an expensive type. This is i. a. caused by the fact that a clamping ring coupling which is connectable with a pipe element of a conventional kind can because of its dimensions, i. a. the material thickness of the clamping ring not be used in connection with crosslinked polyethylene pipes.

The object of the invention is to provide a clamping ring coupling of the kind mentioned above, which can be used for connecting crosslinked polyethylene pipes (PEX pipes) with pipe elements of a conventional kind and provided with external threads.

In order to comply with this object the clamping ring coupling according to the invention is characterized in that the internal thread of the coupling nut is flattened at the thread tops so as to provide an inner diameter of the coupling nut, which exceeds the normal tolerances of the thread so as to allow that the clamping ring coupling can be provided with a clamping ring of such an outer diameter that it can be designed with sufficient material thickness so as to be used for fixing a crosslinked polyethylene pipe in the clamping ring coupling.

Preferably the internal thread of the coupling nut is flattened at the thread tops in such a degree that the clamping ring can in radial direction have a material thickness of at least 1.3 mm, for example 1.4 mm.

In the case that the coupling nut of the clamping ring coupling has a diameter of ¾ inch and at a maximum tolerance has a diameter of 24.658 mm the internal thread of the coupling nut is flattened to a diameter of 25.2 + 0.1 - 0 mm, so that it maximally exceeds the tolerance of the thread by 0.642 mm, while the external thread of the coupling nut when this has a diameter of 1 inch and at maximum tolerance has a diameter of 30.931 mm is flattened to a diameter of 31.3 + 0.1 - 0 mm and thereby maximally exceeds the tolerance of the thread by 0.469 mm.

Preferably the clamping ring coupling comprises a support sleeve having a portion formed with an annular groove for receiving an end portion of the crosslinked polyethylene pipe, the portion formed with the groove constituting a bottom portion, an inner shank portion and an outer shank portion. Thereby, the inner shank portion of the support sleeve can externally be provided with annular beads positioned at an axial distance from each other and engaging the inner surface of the end portion of the pipe. The outer shank portion of the support sleeve has suitably a surface engaging the clamping ring so as to cooperate with the clamping ring when the coupling nut on the pipe element is tightened so as to force the clamping ring against the outer surface of the end portion of the crosslinked polyethylene pipe.

It is preferred that the bottom portion of the support sleeve has at the surface opposite to the groove for receiving the end portion of the crosslinked polyethylene pipe a seal positioned in a groove for engaging an end surface of the pipe element.

An embodiment of the invention shall be described in the following with reference to the accompanying drawings.
Fig. 1 shows partially in axial section a clamping ring coupling according to the invention.
Fig. 2 shows on an enlarged scale the thread profile of a thread included in the clamping ring coupling according to Fig. 1.

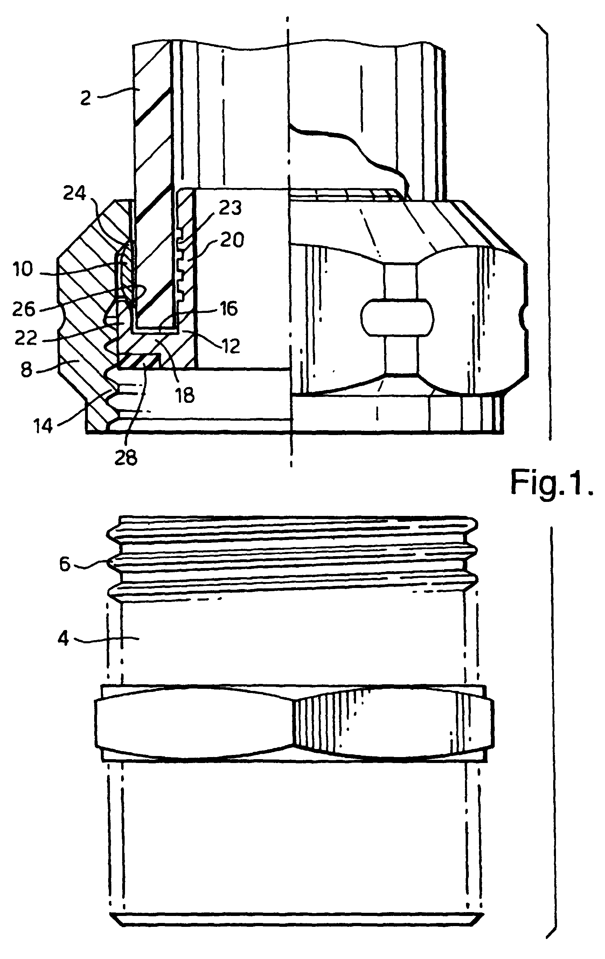

The clamping ring coupling according to the invention as shown in Fig. 1 is intended to be used for connecting an end portion 2 of a crosslinked polyethylene pipe, a so called PEX pipe, with a coupling element 4 which constitutes a conventional pipe element having a conventional external pipe thread 6. The clamping ring coupling comprises a coupling nut 8, a clamping ring 10 and a support sleeve 12. The coupling nut 8 has an internal thread 14 which is adapted to cooperate with the external thread 6 of the coupling element 4. The support sleeve 12 constitutes an annular groove 16 for receiving the end portion 2 of the pipe, and this groove 16 is formed by the fact that the support sleeve 12 has a bottom portion 18 and two annular, concentric shank portions 20 and 22. The inner shank portion 20 of the support sleeve 12 is formed with annular beads 23 positioned at an axial distance from each other and engaging the inner surface of the pipe end portion 2 providing between themselves intermediate grooves, said beads improving the fixing of the pipe end portion in the clamping ring coupling by engaging the pipe end portion. The clamping ring 10 is positioned in the coupling nut 8 between an inner surface thereof and the outer surface of the pipe end portion 2. At its edges the clamping ring 12 engages a conical surface 24 of the coupling nut 8 and an also conical surface 26 on the outer shank portion 22 of the support sleeve 12. When the coupling nut 12 is screwed onto the pipe element 4 the end surface of the pipe element 4 is positioned in sealing engagement with a sealing ring 28 positioned at the bottom portion 18 of the support sleeve 12 so that a tight connection is provided between the clamping ring coupling and the pipe element 4. At the further tightening of the coupling nut 8 on the pipe element 4 the conical surfaces 24 and 26 provide for a radial compression of the clamping ring 10 against the outer surface of the pipe end portion 2, so that the pipe end portion 2 will as a consequence of the engagement with the clamping ring 10 and the beads 22 be in a reliable way fixed in the clamping ring coupling.

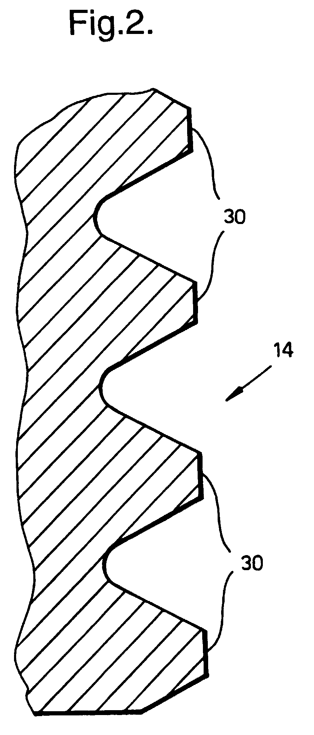

For providing in accordance with the invention sufficient material thickness of the clamping ring 10 and the support sleeve 12 so that the end portion 2 of the pipe consisting of crosslinked polyethylene will in a reliable way be fixed in the clamping ring coupling, the internal thread 14 of the coupling nut 8 is by means of turning provided with an increased inner diameter, as shown in Fig. 2. Thus, the thread tops of the internal thread 14 are flattened at 30 for increasing the inner diameter of the thread 14 so that a clamping ring 10 and a support sleeve 12 having a larger outer diameter than what is normal can be introduced into the coupling nut 8. This provides for a possibility of designing the clamping ring 10 and a support ring 12 with larger material thicknesses in the radial direction so that sufficient action for locking the end portion of a pipe consisting of crosslinked polyethylene can be provided. It is desirable that the clamping ring 10 shall be manufactured with a radial material thickness of at least 1.4 mm. In order to make it possible to introduce into the coupling nut 8 a clamping ring 10 having such an outer diameter that this requirement concerning the material thickness is satisfied, the tops of the internal thread 14 of the coupling nut 8 have in a thread having a diameter of ¾ inch been turned down to a diameter of 24.9 + 0.1 - 0 mm. A thread of ¾ inch has normally a diameter of 24,117 + 0.541 mm which at maximum tolerance gives a diameter of 24.658 mm. This means that the normal, maximum tolerance of a thread having the diameter of ¾ inch in accordance with the invention is maximally exceeded by 25.0 - 24.658 = 0.342 mm. It has been noticed that a thread modified in this way presents quite satisfactory function and strength. Corresponding dimensions of an internal thread 14 of the coupling nut 8 in which the thread has a diameter of 1 inch is in respect of full thread diameter 30.291 - 0.640 = 30.931 mm. When a 1 inch thread is flattened by turning the thread tops, the threads are provided with a diameter of 30.9 + 0.1 - 0 mm, which at a 1 inch thread gives a maximum exceedment of the tolerance of the thread by 31.0 - 30.931 = 0.069 mm. At larger thread diameters the maximum exceedment of the thread tolerance is of course reduced so as to provide that the clamping ring 10 and the support sleeve 12 can be designed with sufficient material thicknesses.

Thus, it is by means of a clamping ring coupling according to the invention possible to connect crosslinked polyethylene pipes with conventional pipe elements provided with a usual pipe thread by means of pipe threaded nuts without use of expensive and complicated special solutions.

The invention can be modified within the scope of the following claims.

## Claims

1. A clamping ring coupling for connecting a pipe (2) of the type crosslinked polyethylene pipe (PEX pipe) with a pipe element (4) of conventional kind and provided with an external thread (6), comprising a coupling nut (8) screwable onto said thread of the pipe element and provided with an internal thread (14) and a clamping ring (10) positioned between the outer surface of the end portion of the pipe (2) and an inner surface in the coupling nut (8) axially inside the internal thread (14) of the coupling nut, the coupling nut and the clamping ring having engagement surfaces contacting each other at the front edge portion of the clamping ring in the direction of screwing the coupling nut onto the pipe element, said engagement surfaces cooperating so as to force the clamping ring against the outer surface of the end portion of the pipe when the coupling nut is tightened onto the pipe element, **characterized** in that the internal thread (14) of the coupling nut (8) is flattened (at 30) at the thread tops for providing an internal diameter of the coupling nut which exceeds the normal tolerance of the thread so as to allow that the clamping ring coupling is provided with a clamping ring (10) of such an external diameter that the clamping ring can be provided with sufficient material thickness so as to be used for fixing a crosslinked polyethylene pipe (2) in the clamping ring coupling.

2. A clamping ring coupling as claimed in claim 1, **characterized** in that the clamping ring (10) has in radial direction a material thickness of at least 1.3 mm.

3. A calmping ring coupling as claimed in claim 2, **characterized** in that the clamping ring (10) has in radial direction a material thickness of at least 1.4 mm.

4. A clamping ring coupling as claimed in any of the preceding claims, the internal thread (14) of the coupling nut (8) being ¾ inch and having at maximum tolerance a diameter of 24.658 mm, **characterized** in that the internal thread (14) of the coupling nut (8) has a diameter of 25.2 + 0.1 - 0 mm and maximally exceeds the normal tolerance of the thread by 0.642 mm.

5. A clamping ring coupling as claimed in any of claims 1 - 3, the internal thread (14) of the coupling nut (8) being ¾ inch and having at maximum tolerance a diameter of 24.658 mm, **characterized** in that the internal thread (14) of the coupling nut (8) has a diameter of 24.9 + 0.1 - 0 mm and maximally exceeds the normal tolerance of the thread by 0.342 mm.

6. A clamping ring coupling as claimed in any of claims 1 - 3, the internal thread (14) of the coupling nut (8) being 1 inch and having at maximum tolerance a diameter of 30.931 mm, **characterized** in that the internal thread (14) of the coupling nut (8) has a diameter of 31.3 + 0.1 - 0 mm and maximally exceeds the normal tolerance of the thread by 0.469 mm.

7. A clamping ring coupling as claimed in any of claims 1 - 3, the internal thread (14) of the coupling nut (8) being 1 inch and having at maximum tolerance a diameter of 30.931 mm, **characterized** in that the internal thread (14) of the coupling nut (8) has a diameter of 30.9 + 0.1 - 0 mm and maximally exceeds the normal tolerance of the thread by 0.069 mm.

8. A clamping ring coupling as claimed in any of the preceding claims, **characterized** in that the clamping ring coupling comprises a support sleeve having a portion formed with an annular groove (16) for receiving an end portion of the pipe (2), said portion forming a bottom portion (18), an inner shank portion (20) and an outer shank portion (22).

9. A clamping ring coupling as claimed in claim 8, **characterized** in that the inner shank portion (20) of the support sleeve (12) is externally provided with annular beads (23) positioned at an axial distance from each other and engaging the inner surface of the pipe end portion and that the outer shank portion of the support sleeve has a surface (26) engaging the clamping ring for cooperating with the clamping ring (10) when the coupling nut (8) is tightened onto the pipe element (4) so as to force the clamping ring (10) against the end portion of the outer surface of the pipe (2).

10. A clamping ring coupling as claimed in claim 8 or 9, **characterized** in that the bottom portion (18) of the support sleeve (12) has a seal (28) positioned at its opposite surface in relation to the groove (16) for receiving the end portion of the pipe (2), said seal being adapted to engage an end surface of the pipe element (4).
